# EUROPEAN PATENT APPLICATION

(11) **EP 2 692 933 A2**
(43) Date of publication of application: **05.02.2014**
(21) Application number: 12763990.4
(22) Date of filing: 27.03.2012
(51) Int. Cl.: D06F 37/22, F16F 15/10, F16F 15/04

(54) **DRUM WASHING MACHINE**

(30) Priority: 28.03.2011 KR 20110027485
(71) Applicant: Daewoo Electronics Corporation, Seoul 100-031 (KR)
(72) Inventor: HWANG, Ui Kun, Bucheon-si Gyeonggi-do 420-861 (KR)
(74) Representative: Michalski Hüttermann & Partner Patentanwälte
(86) International application number: PCT/KR2012/002214
(87) International publication number: WO 2012/134143

(57) **Abstract**

Disclosed herein is a drum washing machine including a cabinet; a tub fillable with wash water; a drum configured to receive laundry therein; a motor at the rear lower portion of the tub; a balancer on or coupled to a front surface of the tub; a plurality of springs having one end affixed or coupled to the cabinet and another end affixed or coupled to an upper surface of the tub to support the tub; and a plurality of dampers having one end affixed or coupled to the cabinet and another end affixed or coupled to a lower surface of the tub, wherein the springs include a first spring affixed or coupled to one side of the cabinet and a second spring affixed or coupled to an opposite side of the cabinet, the first spring having a spring constant different from that of the second spring.

## Description

### [Technical Field]

The present invention relates to a drum washing machine, and more particularly, to a drum washing machine capable of decreasing vibrations by using a plurality of springs having different spring constants.

### [Background Art]

A washing machine uses power from an electric motor as main power and performs washing, rinsing, and dehydrating processes so as to remove stains on laundry. The washing machine includes an electric motor, which is a power apparatus, a mechanical part that transfers energy to the laundry, a controlling part controlling the washing process, a water supply apparatus, a water draining apparatus, and the like.

Washing machines may be classified into agitator type washing machines, pulsator type washing machines, and drum type washing machines, depending on their washing scheme. The agitator type washing machine performs washing by horizontally rotating a spiral agitator at the center of a tub. The pulsator type washing machine performs washing using a water flow generated by rotating a disk shaped pulsator. The drum type washing machine performs washing using impact generated when the laundry is lifted by a lifter in the drum and then dropped into the wash water and detergent as a result of rotating the drum around a horizontal axis.

### [Disclosure]

### [Technical Problem]

In accordance with the related art, since spring constants of springs absorbing vibrations during rotation of the drum are the same, it may be difficult to effectively decrease the vibrations.

Therefore, there is a need to solve such a problem.

The present invention can solve such problems of the related art, and an aspect of the present invention is to provide a drum washing machine capable of decreasing vibrations by using a plurality of springs having different spring constants.

### [Technical Solution]

In accordance with various aspects of the invention, a drum washing machine includes a cabinet; a tub in the cabinet and fillable with wash water; a rotatable drum in the tub and configured to receive laundry therein; a motor at the rear lower portion of the tub and configured to generate power; a motor pulley connected to the motor; a drum pulley connected to the drum; a belt around the motor pulley and the drum pulley so that the motor rotates the drum; a balancer on or coupled to a front surface of the tub; a plurality of springs, each having one end affixed or coupled to the cabinet and another end affixed or coupled to an upper surface of the tub to support the tub; and a plurality of dampers, each having one end affixed or coupled to the cabinet and another end affixed or coupled to a lower surface of the tub, wherein the springs include a first spring affixed or coupled to one side of the cabinet and a second spring affixed or coupled to an opposite side of the cabinet, the first spring having a spring constant different from that of the second spring.

The spring constant of the first spring may be larger than that of the second spring.

The first spring may have a length greater than that of the second spring.

When the drum is not rotated, the first and second springs may have the same length.

The dampers may include a first damper affixed or coupled to one side of the cabinet and a second damper affixed or coupled to an opposite side of the cabinet, wherein the first damper has a frictional force different from that of the second damper.

The frictional force of the first damper may be larger than that of the second damper.

### [Advantageous Effects]

In accordance with one or more embodiments of the present invention, since vibrations may be decreased using one balancer, the assembling process may be simplified and the manufacturing cost may be decreased.

In addition, in accordance with embodiment(s) of the present invention, since movement of the tub may be in a vertical direction during the dehydration cycle by the plurality of springs having different spring constants, vibrations of the tub may be effectively absorbed by the springs.

Further, in accordance with embodiment(s) of the present invention, since the movement of the tub may be in the vertical direction during the dehydration cycle by the plurality of dampers having different frictional forces, vibrations of the tub may be effectively damped or reduced by the dampers.

Furthermore, in accordance with embodiment(s) of the present invention, when positions at which one spring and one damper are mounted are the same as each other, and positions at which another spring and another damper are mounted are the same as each other, vertical movement of the tub due to a spring constant difference between the springs and a frictional force difference between the dampers may be maximized, such that a damping rate for the vibrations of the tub may be further improved.

### [Description of Drawings]

The above and other aspects, features and advantages of the invention will become apparent from the following detailed description in conjunction with the accompanying drawings, in which:
Fig. 1 is a side cross-sectional view of a drum washing machine in accordance with one or more embodiments of the present invention;
Fig. 2 is a perspective view of the drum washing machine in accordance with embodiment(s) of the present invention;
Fig. 3 is a front view of the drum washing machine in accordance with embodiment(s) of the present invention;
Fig. 4 is a bottom perspective view of the drum washing machine in accordance with embodiment(s) of the present invention; and
Fig. 5 is a view illustrating an operation state of the drum washing machine in accordance with embodiment(s) of the present invention.

### [Detailed Description]

Hereinafter, a drum washing machine in accordance with embodiment(s) of the present invention will be described with reference to the accompanying drawings. In the present description, thicknesses of lines, sizes of components, or the like, illustrated in the accompanying drawings may be exaggerated for clarity and convenience of explanation.

Further, the following terminologies are defined in consideration of the functions in the present invention and may be construed in different ways by the intention of users and operators. Therefore, the definitions of terms used in the present description should be construed based on the contents throughout the specification.

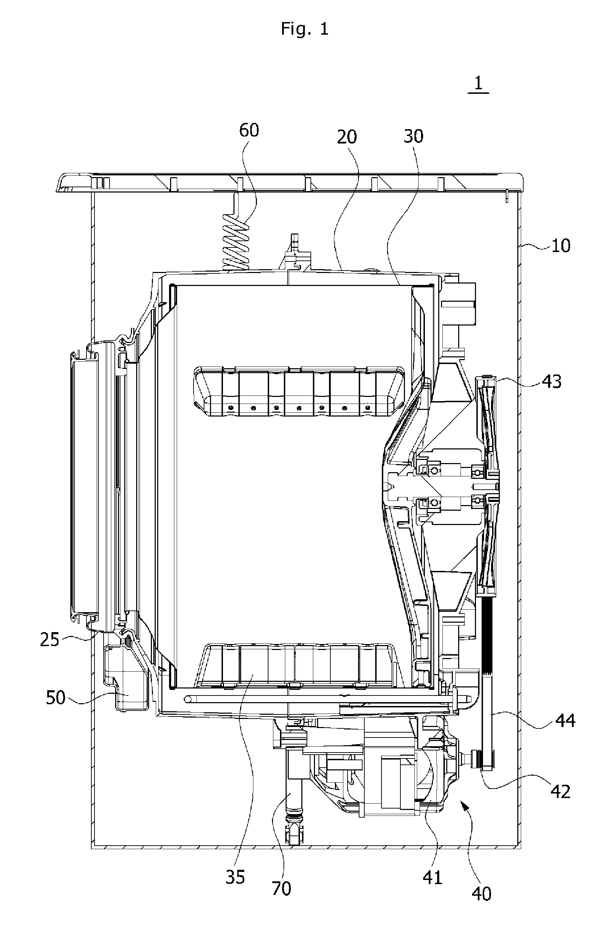

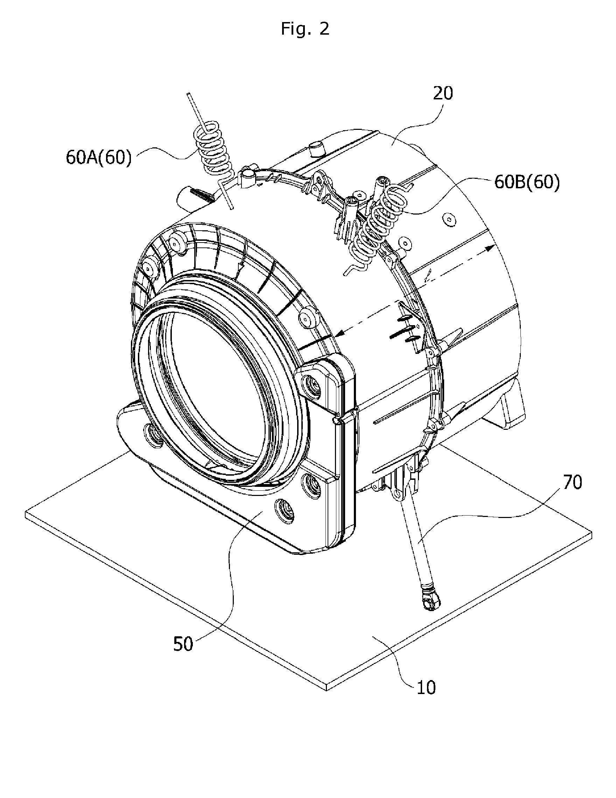

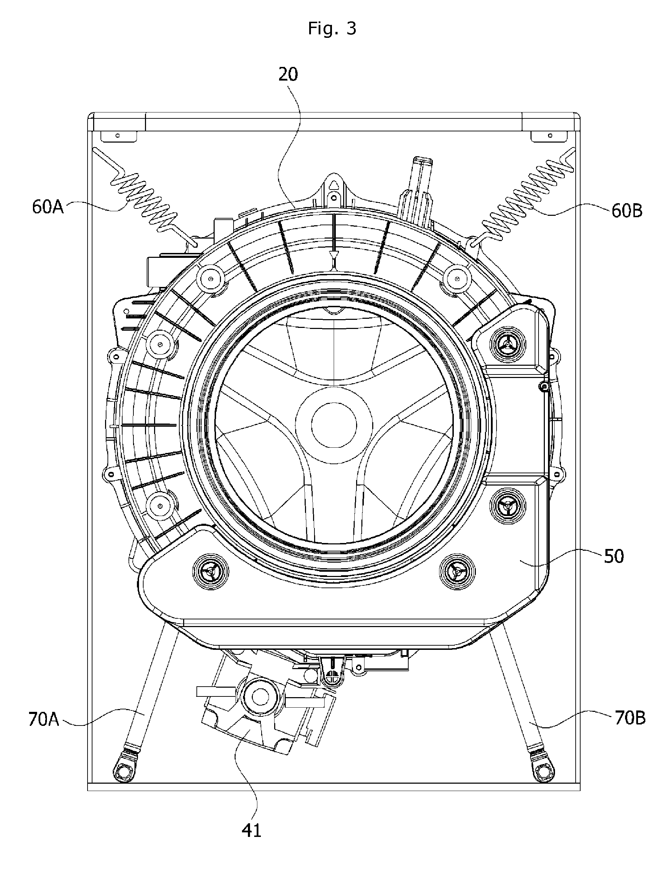

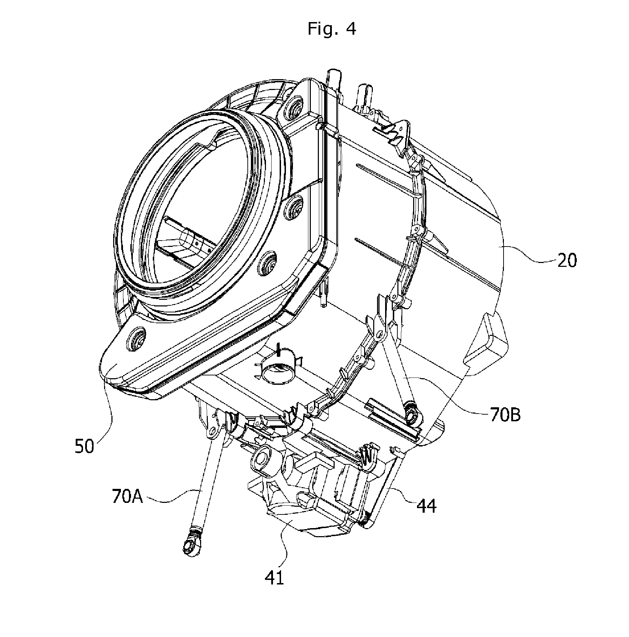

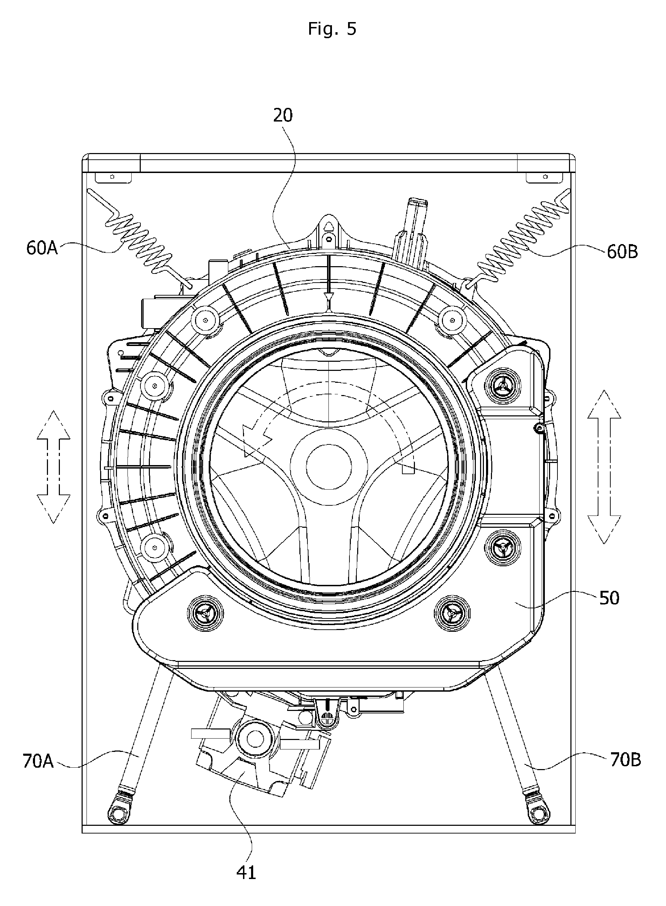

Fig. 1 is a side cross-sectional view of a drum washing machine in accordance with embodiment(s) of the present invention; and Fig. 2 is a perspective view of the drum washing machine in accordance with embodiment(s) of the present invention. Fig. 3 is a front view of the drum washing machine in accordance with embodiment(s) of the present invention; Fig. 4 is a bottom perspective view of the drum washing machine in accordance with embodiment(s) of the present invention; and Fig. 5 is a view illustrating an operation state of the drum washing machine in accordance with embodiment(s) of the present invention.

As illustrated in Figs. 1 to 5, the drum washing machine 1 includes a cabinet 10 that forms an outer appearance of the drum washing machine 1 and protects the components inside the drum washing machine 1, a tub 20 positioned between front and rear plates (based on Fig. 1) of the cabinet 10 and that can be at least partially filled with wash water, a rotatable drum 30 positioned horizontally in the tub 20 and configured to receive laundry therein, a driving part 40 configured to generate power and rotate the drum 30, a balancer 50 on or coupled to a front surface of the tub 20, springs 60 that absorb vibrations of the tub 20, and a damper 70 that dampens or reduces the vibrations of the tub 20.

The front plate of the cabinet 10 is provided with a laundry entrance hole (not illustrated) through which laundry is introduced and discharged or removed. A door (not illustrated) that can be opened and closed is positioned over the laundry entrance hole.

The tub 20 is mounted in the cabinet 20 and has a hollow cylindrical shape that is laid laterally. The rear of the laundry entrance hole has an opening hole (not illustrated).

An upper portion of the tub 20 is provided with a water supplying apparatus (not illustrated) that supplies the wash water into the tub 20 and a detergent housing (not illustrated) that supplies a detergent. The tub 20 has the rotatable drum 30 disposed therein.

The drum 30 has a hollow cylindrical shape that is laterally laid, similar to the tub 20, and includes an opening and/or hole (not illustrated) at the rear of the laundry entrance hole. The drum 30 has holes (not illustrated) in the cylindrical side thereof so that the wash water at least partially filled in the tub 20 may be introduced thereinto and discharged therefrom. The drum 30 has one or more lifters 35 on an inner circumferential surface thereof so as to move the laundry as described herein.

The driving part 40 generates the power to rotate the drum 30. The driving part 40 includes a motor 41, a motor pulley 42, a drum pulley 43, and a belt 44.

The motor 41 is disposed at the rear of a lower portion of the tub 20 (see Fig. 1) and generates the power. The motor pulley 42 is connected to the motor 41, the drum pulley 43 is connected to the drum 30, and the belt 44 is secured around the motor pulley 42 and the drum pulley 43.

A rotational force generated by the motor 41 is transferred to the motor pulley 42. Then, the rotational force is transferred to the drum pulley 42 at the rear of the drum 30 through the belt 44, and the drum 30 is rotated. The motor pulley 42 and the drum pulley 43 have longitudinal grooves in central portions thereof to prevent the belt 44 from separating from the pulleys.

When an unbalanced mass occurs during rotation of the drum 30, vibrations inevitably occur. The balancer 50 includes a body having a predetermined mass and a housing having an internal space configured to guide movement of the body, in order to rapidly decrease vibrations of the drum 30.

The balancer 50 is affixed or coupled to the front surface of the tub 20 (see Fig. 1). The reason why the balancer 50 is on the front surface of the tub 20 as described above is to have a location or position that corresponds to the location or position of the motor 41 at the rear of the tub 20. That is, since the motor 41 having a weight is at the rear of the tub 20, the balancer 50 is positioned on the front surface of the tub 20 in order to reduce, minimize or eliminate a weight unbalance due to the weight of the motor 41.

The motor 41 is on one side (e.g., the left side) of the tub 40 (as viewed in Fig. 3). The balancer 50 is located or positioned so that the center of gravity thereof is biased toward the right side of the tub 20, opposite to the motor 41. Therefore, the tub 40 is horizontally balanced by biasing the weight of the motor 41 toward one side (e.g., the left) and the biasing the center of gravity of the balancer 50 toward the other side (e.g., the right).

The balancer 50 may have an L shape that enables the center of gravity thereof to be biased toward one side of the tub 20 (e.g., to the right). The balancer 50 may also have another shape apart from or in addition to the above-mentioned shapes, as long as the center of gravity thereof is biased toward the right.

The springs 60 have an upper end affixed or coupled to an upper end portion of a side plate or panel of the cabinet 10 and a lower end affixed or coupled to an upper surface of the tub 20. Therefore, the springs 60 support the tub 20 and absorb the vibrations of the tub 20 (e.g., that may occur at the time of a dehydration cycle).

The number of springs 60 is plural. The same number of springs 60 are generally mounted on each of the left and right sides of the tub 20 to absorb the vibrations due to horizontal and/or vertical movement of the tub 20. Although one spring 60 is mounted on each of the left and right sides of the tub 20 in the embodiment, the present invention is not limited thereto.

The springs 60 are affixed or coupled to the upper surface of the tub 20 at a center of gravity of the tub 20. Here, the center of gravity of the tub 20 means the center of gravity when the balancer 50 and the motor 41 are mounted on of affixed to the tub 20, rather than the center of gravity of only the tub 20 itself.

The springs 60 may be positioned at the center of gravity of the tub 20 so that the tub 20 is balanced in the front-to-rear direction. In accordance with such an embodiment, the lower end of the springs 60 is affixed or coupled to the tub 20 at the center of gravity of the tub 20 in the front-to-rear direction, and the upper end of the springs 60 is affixed or coupled to the cabinet 10 at the same position in the front-to-rear direction as that of the lower end of the springs 60 (see Fig. 1).

Hereinafter, a spring 60 affixed or coupled to the left (based on Fig. 3) of the tub 20 is referred to as the first spring 60A, and a spring 60 affixed or coupled to the right of the tub 20 is referred to as the second spring 60B.

In one or more embodiments, a spring constant of the first spring 60A is different from that of the second spring 60B. Here, the spring constant is a constant indicating a proportional relationship between a force acting on the spring and a corresponding change of length of the spring. As the spring constant becomes larger, a larger force is required to extend or compress the spring. In one embodiment, the spring constant may be adjusted by increasing or decreasing the number of windings or turns of the spring 60.

The spring constant of the first spring 60A may be larger than that of the second spring 60B. Therefore, when the same force acts on the first spring 60A and the second spring 60B, the second spring 60B extends and/or compresses further, as compared to the first spring 60A.

That is, when vibrations having the same magnitude are applied to the first spring 60A and the second spring 60B during the dehydration cycle, an extension and/or compression length of the second spring 60B is larger than that of the first spring 60A.

In one embodiment, the first spring 60A has a length greater than that of the second spring 60B. As described above, since the first spring 60A has a spring constant larger than that of the second spring 60B, when the drum 30 is not rotated, that is, when a washing cycle is not performed, the length of the first spring 60A should be greater than that of the second spring 60B, based on the case in which force is not applied (or equal forces are applied) to the first spring 60A and the second spring 60B in order to horizontally balance the tub 20.

In the example of Fig. 3, the entire length of the first spring 60A extended by a predetermined length by the weight of the tub 30 is believed to be the same as that of the second spring 60B. Therefore, the tub 20 is supported by the springs 60 in a state in which it is horizontally balanced.

A weight of the balancer 50 is greater than that of the motor 41. In accordance with various embodiments, the weight of the motor 41 may be about 5 kg, and the weight of the balancer 50 may be about 9 kg.

Since the balancer 50 is heavier than the motor 41, the center of gravity of the tub 20 on which both of the motor 41 and the balancer 50 are mounted is in front of the center of the tub 20 along the front-to-rear direction.

Therefore, the springs 60 are affixed or coupled to the upper surface of the tub 20 at a position ahead of the center of the tub 20.

The dampers 70 have an upper end affixed or coupled to the lower surface of the tub 20 and a lower end affixed or coupled to a lower surface plate of the cabinet 10. Therefore, the dampers 70 dampen or reduce the vibrations of the tub 20 during the dehydration cycle.

The number of dampers 70 is plural. In one or more embodiments, two dampers 70 are provided, in which one damper is affixed or coupled to the left side of the tub 20, and another damper is affixed or coupled to the right side of the tub 20, respectively, to dampen the vibrations due to horizontal and/or vertical movement of the tub 20.

The dampers 70 are affixed or coupled to the lower surface of the tub 20 behind the springs 60 (see Fig. 1). In accordance with one or more embodiments, the dampers 70 are affixed or coupled to the lower surface of the tub 20 at the center along the front-to-rear direction of the tub 20.

Since the springs 60 is positioned ahead of the center of the tub 20 along the front-to-rear direction, and a front end of the tub 20 is fixed to a gasket 25 (Fig. 1), when an unbalanced mass results from the rotation of the drum at the time of the dehydration cycle, relatively large vibrations may be generated at the rear of the tub 20, as compared to the front of the tub 20.

Therefore, the dampers 70 may be positioned behind the center of gravity of the tub 20 to dampen or reduce the relatively large vibrations at the rear of the tub 20, thereby making it possible to further improve a vibration damping effect.

When the dampers 70 are excessively close to the rear of the tub 20, the damping rate for vibrations at the front of the tub 20 decreases. Thus, the dampers 70 may be advantageously located at the center along the front-to-rear direction of the tub 20 so as to dampen or reduce the vibrations at both of the front and the rear of the tub 20.

Hereinafter, a damper 70 affixed or coupled to the left side (based on Fig. 3) of the tub 20 is referred to as the first damper 70A, and a damper 70 affixed or coupled to the right side of the tub 20 is referred to as the second damper 70B. In one or more embodiments, the frictional force of the first damper 70A is different from that of the second damper 70B. Here, the frictional force is calculated by the product of normal force and the friction factor of an object. The larger the frictional force, the larger the force required to compress the damper 70. More specifically, the frictional force of the first damper 70A may be larger than that of the second damper 70B. Therefore, when the same force acts on the first damper 70A and the second damper 70B, the second damper 70B is compressed further than the first damper 70A.

That is, when vibrations having the same magnitude are applied to the first damper 70A and the second damper 70B during the dehydration cycle, a compression length of the second damper 70B is larger than that of the first damper 70A.

The lifter(s) 35 on the inner circumferential surface of the drum 30 face or point toward a central portion of the drum 30. The lifter(s) 35 lift the laundry in the drum 30 as the drum 30 rotates.

Hereinafter, an operation principle of the drum washing machine in accordance with one or more embodiments of the present invention will be described.

After the laundry is placed in the drum 30, one or more buttons, dials and/or selections on an operating panel (not shown) may be pushed, turned or selected to operate the drum washing machine 1. As a washing cycle starts, the wash water is supplied to the tub 20 and is also introduced into the drum 30 through the holes in the drum cylinder.

The motor 40 is driven to rotate the drum 30, and the laundry in the drum 30 is lifted by the lifter(s) 35 fixed to the inner circumferential surface of the drum 30. The laundry then drops down into the wash water in the tub 20 and drum 30.

In the drum washing machine 1, large vibrations may be generated at the time of the dehydration cycle, among several washing cycles. These vibrations are reduced (e.g., rapidly decreased) by the balancer 50 located at a position corresponding to and/or balancing that of the motor 41.

The vibrations generated during rotation of the drum 30 are also decreased by the springs 60 and the dampers 70, in addition to the balancer 50. The springs 60 are positioned ahead of the center of the front-to-rear length of the tub 20 when there is a weight difference between the balancer 50 and the motor 41 to maintain of the balance of the tub 20 in the front-to-rear direction. The dampers 70 are affixed or coupled to the tub 20 behind (or ahead of) the springs 60 to offset any increase in vibrations at the rear of the tub 20 caused by a forward or backward shift of the center of gravity of the tub 20.

With the above-mentioned configuration, at most a single balancer 50 may sufficiently decrease the vibrations of the drum washing machine 1 during the dehydration cycle. Therefore, the process of assembling the balancer 50 may be simplified and the manufacturing cost may be decreased as compared with the related art in which a plurality of balancers are provided.

The springs 60 are divided into a first spring 60A and the second spring 60B to induce a movement of the tub 20 in a vertical direction during the dehydration cycle. Since the spring constant of the second spring 60B is smaller than that of the first spring 60A, the right side of the tub 20 to which the second spring 60B is affixed may have more vertical movement as compared with the left side of the tub 20 to which the first spring 60A is affixed (e.g., during the dehydration or spin-drying cycle, in which the drum 30 is rotated in a clockwise or counterclockwise direction).

In accordance with the related art in which the tub is supported by springs having the same spring constant, a rotation trajectory of the tub has substantially a circle shape. However, in accordance with the present disclosure in which the tub 20 is supported by springs 60 having different spring constants, a rotation trajectory of the tub 20 has substantially an oval shape in which the vertical length of the oval is greater than the horizontal length of the oval.

Since movement of the tub 20 is greater in the vertical direction due to the change of the rotation trajectory of the tub 20 by the springs 60 as described above, an absorption rate for the vibrations of the tub 20 using the springs 60 is improved. In general, the ability of springs to absorb vertical vibrations is higher than the ability of springs to absorb horizontal vibrations.

The dampers 70 are divided into a first damper 70A and a second damper 70B to induce the movement of the tub 20 in the vertical direction at the time of the dehydration or spin-drying cycle. Since the frictional force of the second damper 70B is smaller than that of the first damper 70A, the right side of the tub 20 to which the second damper 70B is mounted may have more vertical movement as compared with the left side of the tub 20 to which the first damper 70A is mounted (e.g., during the dehydration or spin-drying cycle, in which the drum 30 is rotated in the clockwise or counterclockwise direction).

In accordance with the related art in which the tub is supported by dampers having the same frictional force, a rotation trajectory of the tub has substantially a circle shape. However, in accordance with the present disclosure in which the tub 20 may be supported by dampers 70 having different frictional forces, a rotation trajectory of the tub 20 has substantially an oval shape in which the vertical length of the oval is greater than the horizontal length of the oval.

Since movement of the tub 20 is greater in the vertical direction due to the change of the rotation trajectory of the tub 20 into an oval shape by the dampers 70 as described above, the damping rate for vibrations of the tub 20 using the dampers 70 is improved. In general, the ability of dampers to absorb vertical vibrations is higher than the ability of dampers to absorb horizontal vibrations.

Further, in the present disclosure, since positions at which one spring 60A and one damper 70A are mounted are the same as each other, and positions at which another spring 60B and another damper 70B are mounted are the same as each other, the change of the vibrational movement of the tub 20 in the vertical direction due to a spring constant difference between the springs 60 and a frictional force difference between the dampers 70 may be maximized. Thus, the damping rate for vibrations of the tub 20 may be further improved.

Although the present invention has been described with reference to embodiments shown in the accompanying drawings, they are only examples. It will be appreciated by those skilled in the art that various modifications and equivalent other embodiments are possible from the present invention.

Therefore, the scope of the present invention is to be defined by the following claims.

## Claims

1. A drum washing machine comprising:
a cabinet;
a tub in the cabinet and fillable with wash water;
a rotatable drum in the tub and configured to receive laundry therein;
a motor at a rear lower portion of the tub and configured to generate power;
a motor pulley connected to the motor;
a drum pulley connected to the drum;
a belt around the motor pulley and the drum pulley so that the motor rotates the drum;
a balancer on or coupled to a front surface of the tub;
a plurality of springs, each having one end affixed or coupled to the cabinet and another end affixed or coupled to an upper surface of the tub to support the tub; and
a plurality of dampers, each having one end affixed or coupled to the cabinet and another end affixed or coupled to a lower surface of the tub,
wherein the plurality of springs include a first spring affixed or coupled to one side of the cabinet and a second spring affixed or coupled to an opposite side of the cabinet, the first spring having a spring constant different from that of the second spring.

2. The drum washing machine according to claim 1, wherein the spring constant of the first spring is larger than that of the second spring.

3. The drum washing machine according to claim 2, wherein the first spring has a length greater than that of the second spring.

4. The drum washing machine according to claim 3, wherein when the drum is not rotated, the first spring and the second spring have a same length.

5. The drum washing machine according to claim 2, wherein the dampers include a first damper affixed or coupled to one side of the cabinet and a second damper affixed or coupled to an opposite side of the cabinet, the first damper having a frictional force different from that of the second damper.

6. The drum washing machine according to claim 5, wherein the frictional force of the first damper is larger than that of the second damper.
